# EUROPEAN PATENT APPLICATION

(11) **EP 4 560 150 A1**
(43) Date of publication of application: **28.05.2025**
(21) Application number: 23211474.4
(22) Date of filing: 22.11.2023
(51) Int. Cl.: F16B 2/10, H02S 20/20, F16B 2/22, F24S 25/65

(54) **A SUPPORT ELEMENT FOR A PROFILE CLAMPING DEVICE**

(71) Applicant: Allimex, 3980 Tessenderlo (BE)
(72) Inventor: BAUWENS, Merlin, 3980 Tessenderlo (BE)
(74) Representative: Gevers Patents

(57) **Abstract**

The invention provides a support element (200) for a profile clamping device (100). The profile clamping device (100) comprises a support arm (110) for supporting a profile (300); a tiltable clamp arm (120) configured for being supported against a profile side (301) for clamping the profile (300); and a fastener (130) arrangeable through support and clamp arm openings (115, 125) and operable for moving the clamp and support arm (120, 110) towards each other for tightening the clamping. The support element (200) comprises a base portion (210) supportable on the support arm (110) between the support and clamp arm (110, 120), and comprising an opening for the fastener (130) when arranged through the support and clamp arm openings (115, 125); and an upwards extending support portion (220) for supporting the clamp arm (120) when the support element (200) is supported on the support arm (110).

## Description

### Technical field

The present invention relates to a support element for a profile clamping device, a profile clamping device and a use of the profile clamping device.

### Background art

From the prior art a profile clamping device is known. The profile clamping device is used for clamping a profile, preferably a profile for supporting solar panels. The profile clamping device comprises a support arm configured for supporting the profile. The profile clamping device comprises a clamp arm connected in a tiltable manner to the support arm. The clamp arm is configured for being supported against a side of the profile for clamping the profile on the support arm by means of the clamp arm. The profile clamping device comprises a fastener, such as for example a bolt and nut. The fastener is arranged through an opening of the support arm and an opening of the clamp arm. The fastener is operable for moving the clamp arm and the support arm towards each other for tightening the clamping of the profile on the support arm by means of the clamp arm. With a bolt and nut as fastener this achieved by screwing the nut on the bolt such that the clamp arm and the support arm are moved towards each other between the nut and a bolt head of the bolt. To clamp a profile on the profile clamping device the clamp arm has to be tilted away manually from the support arm and kept manually in this position to allow for the profile to be supported on the support arm. After the profile has been supported on the support arm the clamp arm is then tilted towards the profile to be supported against a side of the profile for clamping the profile on the support arm by means of the clamp arm. Operating the fastener then moves the clamp arm and the support arm towards each other for tightening the clamping of the profile on the support arm by means of the clamp arm.

The profile clamping device known from the prior art has the disadvantage that the clamp arm has to be tilted away manually from the support arm and kept manually in this position to allow for the profile to be supported on the support arm. If this would not be done the clamp arm would fall back towards the support arm, which prevents the profile from being supported on the support arm. These manual actions required of the user of the profile clamping device are difficult and time consuming, certainly if they have to be repeated for several profile clamping devices that have to clamp the same profile.

### Disclosure of the invention

It is an aim of the present invention to provide a support element for a profile clamping device which makes it easier to use the profile clamping device, and which allows for a profile to be clamped more quickly by means of the profile clamping device.

This aim is achieved according to the invention with a support element showing the technical characteristics of the first independent claim.

Therefore, the present invention provides a support element for a profile clamping device. The profile clamping device comprises a support arm. The support arm is configured for supporting a profile. Preferably, the support arm extends along a first direction. Preferably, the support arm is configured for supporting the profile such that the profile is not slidable on the support arm in the first direction. Preferably, the support arm is configured for receiving or holding the profile. Preferably, the support arm is configured for receiving or holding a bottom portion of the profile. Preferably, the support arm is configured for supporting the profile with the profile extending with its longitudinal direction along a second direction transverse to the first direction. The profile clamping device comprises a clamp arm. The clamp arm is connected in a tiltable or pivotable manner to the support arm. Preferably, the clamp arm is tiltable or pivotable around a second direction transverse to the first direction. The clamp arm is configured for being supported against a side of the profile for clamping the profile on the support arm by means of the clamp arm. The profile clamping device comprises a fastener. The fastener is configured for being arranged through an opening of the support arm and an opening of the clamp arm. The fastener is configured to be operable for moving the clamp arm and the support arm towards each other for tightening the clamping of the profile on the support arm by means of the clamp arm. The support element comprises a base portion. The base portion is configured for being supported on the support arm of the profile clamping device between the support arm and the clamp arm of the profile clamping device. The base portion comprises an opening configured for passing therethrough the fastener of the profile clamping device when the fastener of the profile clamping device is arranged through the opening of the support arm and the opening of the clamp arm of the profile clamping device. The support element comprises at least one support portion. The at least one support portion extends upwards from the base portion. The at least one support portion is configured for supporting the clamp arm when the support element is supported with the base portion on the support arm of the profile clamping device. Preferably, the at least one support portion is configured for resiliently supporting the clamp arm when the support element is supported with the base portion on the support arm of the profile clamping device.

The support element, when arranged with the base portion on the support arm of the profile clamping device between the support arm and the clamp arm of the profile clamping device, is beneficial for supporting the clamp arm of the profile clamping device by means of the at least one support portion. In this way, the clamp arm does not have to be tilted away manually from the support arm and kept manually in this position to allow for a profile to be supported on the support arm. In this way, the user has its hands free for supporting the profile on the support arm and for operating the fastener, without thereby being hindered by the clamp arm. Hence, the addition of the support element according to the present invention makes it easier to use a profile clamping device, and allows for a profile to be clamped more quickly by means of the profile clamping device.

In an embodiment of the support element according to the present invention the support element comprises at least one gripping element. The at least one gripping element is configured for gripping on the support arm of the profile clamping device when the support element is supported with the base portion on the support arm of the profile clamping device. Preferably, the at least one gripping element is configured for gripping on the support arm of the profile clamping device from at least one side of the support arm when the support element is supported with the base portion on the support arm of the profile clamping device. Preferably, the at least one gripping element is configured for gripping on the support arm of the profile clamping device from at least one side of the support arm in the second direction when the support element is supported with the base portion on the support arm of the profile clamping device. Preferably, the at least one gripping element is configured for gripping on the support arm of the profile clamping device from opposing sides of the support arm in the second direction when the support element is supported with the base portion on the support arm of the profile clamping device. Preferably, the at least one gripping element extends downwards from the base portion.

The at least one gripping element is beneficial to maintain the support element in position on the support arm of a profile clamping device when the support element is supported with the base portion on the support arm of the profile clamping device, such that the clamp arm of the profile clamping device is always supported in the correct manner by the at least one support portion. Hence, this prevents the support element from changing in position on the support arm of the profile clamping device, which would change the support of the clamp arm provided by the at least one support portion in an undesired way. This embodiment of the support element thus further improves the ease of use of a profile clamping device including said support element, and also allows for a profile to be clamped more quickly by means of the profile clamping device.

In an embodiment of the support element according to the present invention the at least one gripping element comprises a first gripping element and a second gripping element. The first gripping element and the second gripping element are arranged on opposing ends of the base portion. Preferably, the first gripping element and the second gripping element are arranged on opposing ends of the base portion in the second direction.

The first gripping element and the second gripping element being arranged on opposing ends of the base portion is beneficial for gripping on the support arm of a profile clamping device from opposing sides when the support element is supported with the base portion on the support arm of the profile clamping device. This improves of the gripping of the support element on the profile clamping device, and thus the ability to maintain the correct supporting position of the support element on the support arm of the profile clamping device. This embodiment of the support element thus further improves the ease of use of a profile clamping device including said support element, and also allows for a profile to be clamped more quickly by means of the profile clamping device.

In an embodiment of the support element according to the present invention the opening of the base portion is provided with inwards projecting teeth configured for holding the fastener of the profile clamping device in position when the fastener of the profile clamping device is passed through the opening of the base portion.

The inwards projecting teeth configured for holding the fastener of a profile clamping device in position when the fastener of the profile clamping device is passed through the opening of the base portion, are beneficial for preventing the fastener from pushing down on the clamp arm of the profile clamping device. In this way, the clamp arm of the profile clamping device is not pushed towards the support arm of the profile clamping device by the fastener against the support provided by the at least one support portion of the support element. Hence, a good support of the clamp arm by means of the at least one support portion is in this way maintained. This embodiment of the support element thus further improves the ease of use of a profile clamping device including said support element, and also allows for a profile to be clamped more quickly by means of the profile clamping device.

In an embodiment of the support element according to the present invention the at least one support portion is resilient.

The at least one support portion being resilient is beneficial for resiliently supporting the clamp arm of a profile clamping device when the support element is supported with the base portion on the support arm of the profile clamping device, while still allowing the at least one support portion to be compressed between the clamp arm and the support arm of the profile clamping device when the clamp arm and the support arm of the profile clamping device are being moved towards each other by the operation of the fastener. In this way the at least one support portion does not hinder the movement of the clamp arm and the support arm of the profile clamping device towards each other when the fastener of the profile clamping device is operated for tightening the clamping of a profile on the support arm of the profile clamping device by means of the clamp arm of the profile clamping device. Hence, even with the presence of the at least one support portion between the clamp arm and the support arm of the profile clamping device an easy tightening of the clamping of the profile is possible.

In an embodiment of the support element according to the present invention the at least one support portion comprises a first support portion and a second support portion. The first support portion and the second support portion are arranged on opposing sides of the opening of the base portion. Preferably, the first support portion and the second support portion are arranged on opposing sides of the opening of the base portion in the second direction.

This embodiment offers the advantage that, when the support element is supported with the base portion on the support arm of a profile clamping device, the clamp arm of the profile device is supported by the first support portion and the second support portion of the support element at opposing sides of the fastener of the profile clamping device arranged through the openings in the clamp arm of the profile clamping device, the base portion of the support element and the support arm of the profile clamping device. This is beneficial for providing a good support to the clamp arm of the profile device. This embodiment of the support element thus further improves the ease of use of a profile clamping device including said support element, and also allows for a profile to be clamped more quickly by means of the profile clamping device.

In an embodiment of the support element according to the present invention the at least one support portion extends upwards from the base portion and curves sidewards. Preferably, the at least one support portion extends upwards from the base portion and curves sidewards in the first direction. Preferably, the at least one support portion is thereby configured to curve sidewards towards the clamp arm of the profile clamping device when the support element is supported with the base portion on the support arm of the profile clamping device.

The at least one support portion extending upwards from the base portion and curving sidewards is a beneficial shape for collapsing the at least one support portion with little resistance between the clamp arm and the support arm of the profile clamping device when the clamp arm and the support arm of the profile clamping device are being moved towards each other by the operation of the fastener. In this way the at least one support portion does not hinder the movement of the clamp arm and the support arm of the profile clamping device towards each other when the fastener of the profile clamping device is operated for tightening the clamping of a profile on the support arm of the profile clamping device by means of the clamp arm of the profile clamping device. Hence, even with the presence of the at least one support portion between the clamp arm and the support arm of the profile clamping device an easy tightening of the clamping of the profile is possible.

In an embodiment of the support element according to the present invention the at least one support portion is provided thinner at a bottom section of the at least one support portion near the base portion.

The at least one support portion being thinner at a bottom section near the base portion allows for bending of the at least one support portion at said bottom section when the clamp arm and the support arm of the profile clamping device are being moved towards each other by the operation of the fastener with the support element arranged between the clamp arm and the support arm of the profile clamping device. This is beneficial for collapsing the at least one support portion with little resistance between the clamp arm and the support arm of the profile clamping device when the clamp arm and the support arm of the profile clamping device are being moved towards each other by the operation of the fastener. In this way the at least one support portion does not hinder the movement of the clamp arm and the support arm of the profile clamping device towards each other when the fastener of the profile clamping device is operated for tightening the clamping of a profile on the support arm of the profile clamping device by means of the clamp arm of the profile clamping device. Hence, even with the presence of the at least one support portion between the clamp arm and the support arm of the profile clamping device an easy tightening of the clamping of the profile is possible.

In an embodiment of the support element according to the present invention the support element is manufactured in a single piece.

In an embodiment of the support element according to the present invention the support element is manufactured from a plastic.

In an embodiment of the support element according to the present invention the support element is manufactured by means of injection moulding.

The present invention also provides a profile clamping device comprising the support element according to the present invention. The profile clamping device comprises a support arm. The support arm is configured for supporting a profile. Preferably, the support arm extends along a first direction. Preferably, the support arm is configured for supporting the profile such that the profile is not slidable on the support arm in the first direction. Preferably, the support arm is configured for receiving or holding the profile. Preferably, the support arm is configured for receiving or holding a bottom portion of the profile. Preferably, the support arm is configured for supporting the profile with the profile extending with its longitudinal direction along a second direction transverse to the first direction. The profile clamping device comprises a clamp arm. The clamp arm is connected in a tiltable or pivotable manner to the support arm. Preferably, the clamp arm is tiltable or pivotable around a second direction transverse to the first direction. The clamp arm is configured for being supported against a side of the profile for clamping the profile on the support arm by means of the clamp arm. The profile clamping device comprises a fastener. The fastener is configured for being arranged through an opening of the support arm and an opening of the clamp arm. The fastener is configured to be operable for moving the clamp arm and the support arm towards each other for tightening the clamping of the profile on the support arm by means of the clamp arm. The support element is supported with the base portion on the support arm between the support arm and the clamp arm with the at least one support portion of the support element supporting the clamp arm. The fastener is arranged through the opening of the support arm, the opening of the base portion of the support element and the opening of the clamp arm.

In an embodiment of the profile clamping device according to the present invention the support element is supported with the base portion on the support arm between the support arm and the clamp arm with the at least one gripping element of the support element gripping on the support arm.

In an embodiment of the profile clamping device according to the present invention the support arm is provided with a recess for receiving the base portion of the support element. The support element is supported with the base portion on the support arm with the base portion received in said recess.

The support element being received with the base portion in the recess of the support arm is beneficial to maintain the support element in position on the support arm, such that the clamp arm of is always supported in the correct manner by the at least one support portion of the support element. Hence, this prevents the support element from changing in position on the support arm, which would change the support of the clamp arm provided by the at least one support portion in an undesired way. This embodiment of the profile clamping device thus further improves the ease of use of the profile clamping device, and also allows for a profile to be clamped more quickly by means of the profile clamping device.

In an embodiment of the profile clamping device according to the present invention the fastener comprises a bolt and a nut.

The present invention also provides a method of using the profile clamping device according to the present invention. The method comprises the step of providing a profile. The method comprises the step of supporting the profile on the support arm. The method comprises the step of operating the fastener for moving the clamp arm and the support arm towards each other, such that the clamp arm is supported against a side of the profile for clamping the profile on the support arm by means of the clamp arm.

### Brief description of the drawings

The invention will be further elucidated by means of the following description and the appended figures.
Figure 1 shows a back perspective view of a support element according to an embodiment of the present invention.
Figure 2 shows a side view of the support element of Figure 1.
Figure 3 shows a top view of the support element of Figure 1.
Figure 4 shows a bottom view of the support element of Figure 1.
Figure 5 shows a back view of the support element of Figure 1.
Figure 6 shows a front perspective view of a profile clamping device according to an embodiment of the present invention.
Figure 7 shows a back perspective view of the profile clamping device of Figure 6.
Figure 8 shows a side view of the profile clamping device of Figure 6.
Figure 9 shows a side view of a profile on a profile clamping device according to an embodiment of the present invention.
Figure 10 shows a side of a profile clamped on the profile clamping device of Figure 9.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

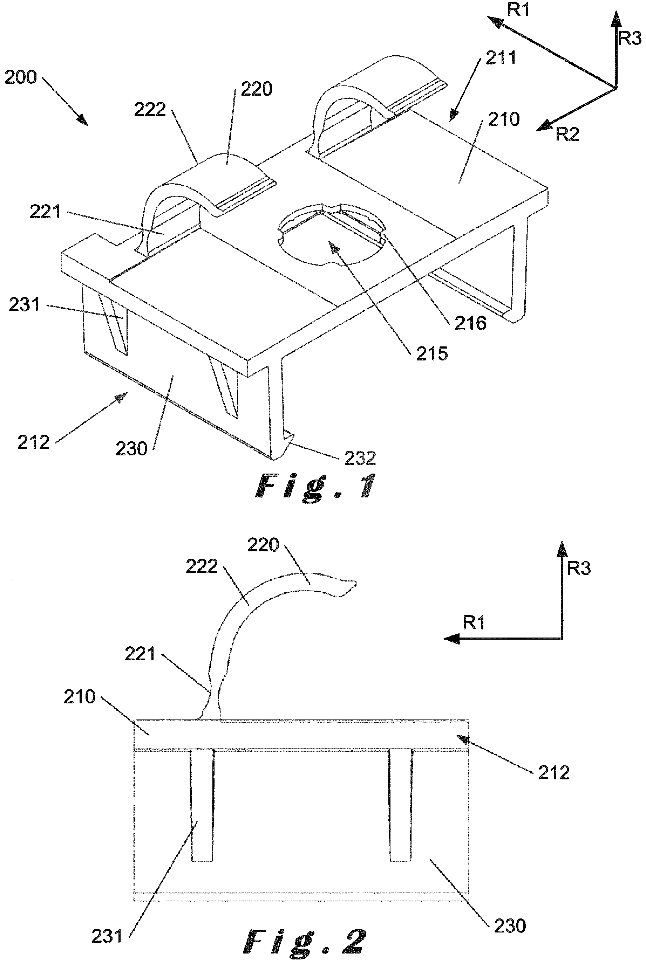

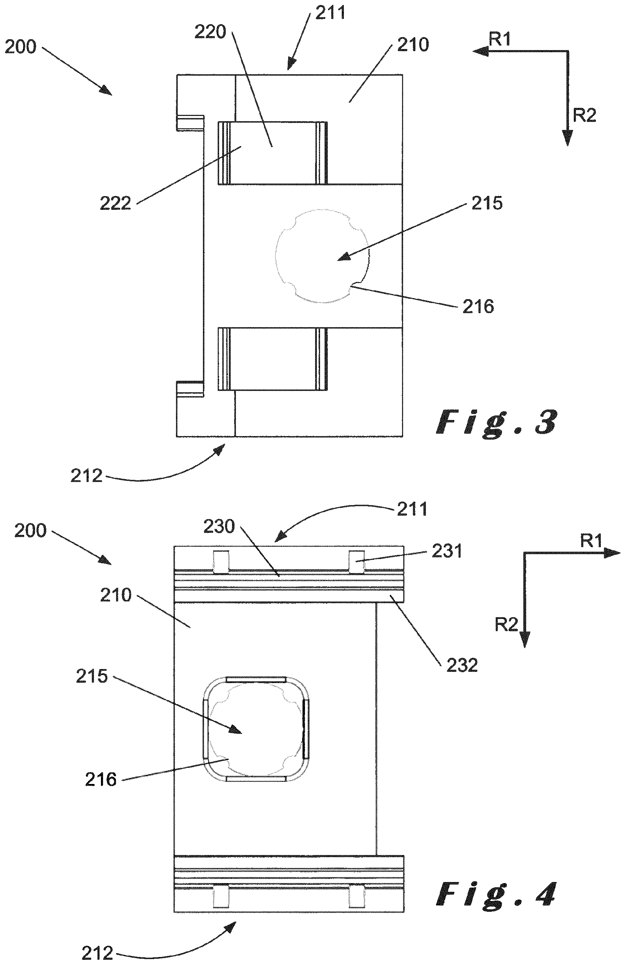

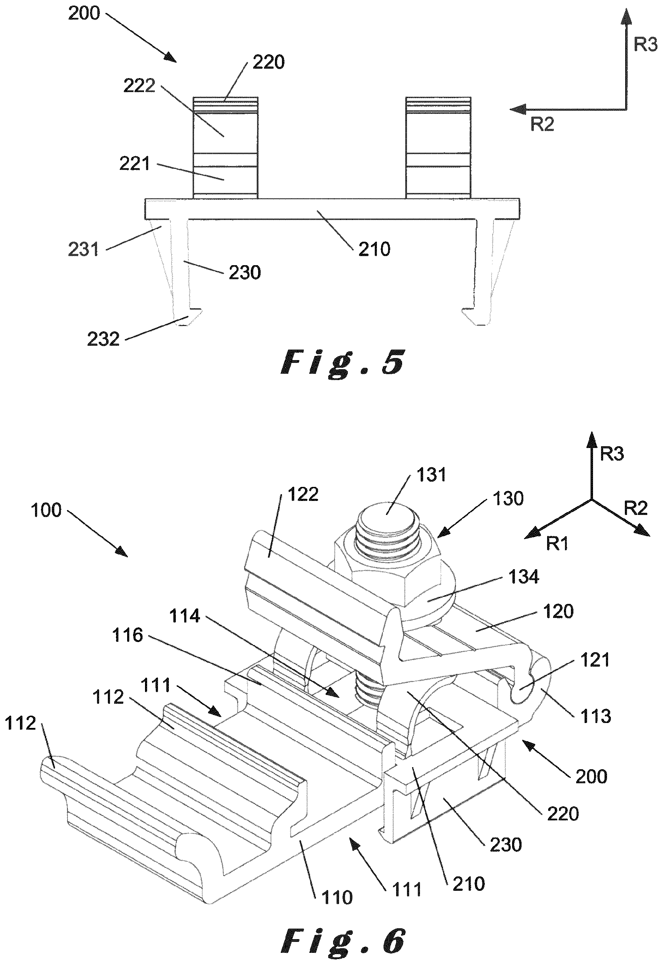

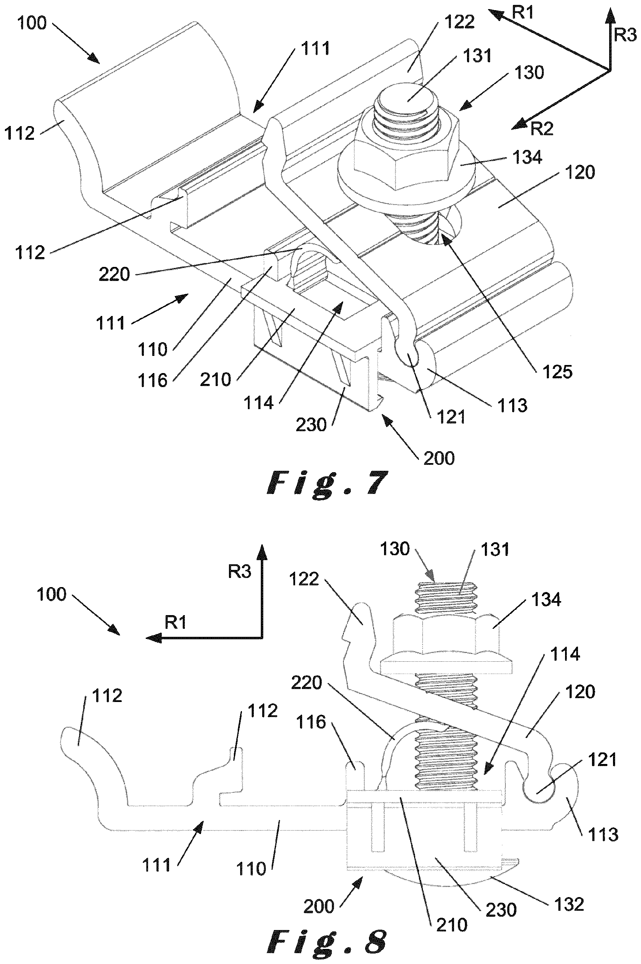

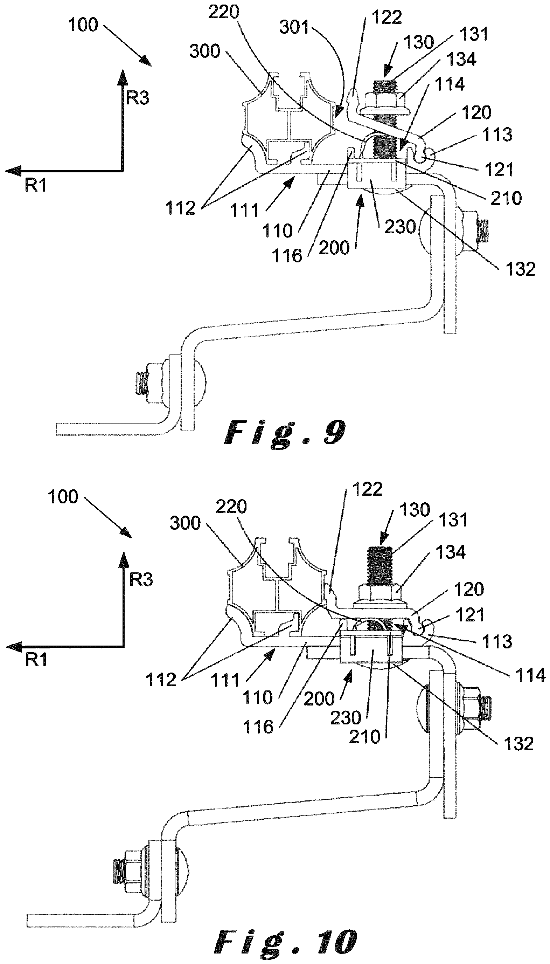

Figures 1-5 show a support element 200 according to an embodiment of the present invention for being used on a profile clamping device 100 according to an embodiment of the present invention, as shown in Figures 6-8, and as shown in Figures 9-10 in combination with a profile 300 to be clamped by the profile clamping device 100. The profile 300 is preferably a profile 300 for supporting solar panels (not shown).

The profile clamping device 100 comprises a support arm 110. The support arm 110 extends along a first direction R1. The support arm 110 is configured for supporting the profile 300. Thereby, the profile 300 extends lengthwise along a second direction R2 transverse to the first direction R1. For supporting the profile 300, the support arm 110 is provided at one end in the first direction R1 with a receiving structure 112 for receiving or holding a bottom portion of the profile 300. The receiving structure 112 is arranged such that the profile 300 is not slidable on the support arm 110 in the first direction R1 towards the end where the receiving structure 112 is located.

The profile clamping device 100 further comprise a clamp arm 120. The clamp arm 110 extends along the first direction R1. The clamp arm 120 is connected in a tiltable or pivotable manner to the support arm 110. Therefore, the clamp 120 is provided at first end 121 in the first direction R1 with a cylindrical end portion that is received in a longitudinal socket 113 on the support arm 110. The longitudinal socket 113 is located at an end of the support arm 110 that is in the first direction R1 opposite of the end where the receiving structure 112 for the profile 300 is located. The longitudinal socket 113 on the support arm 110 and the cylindrical end portion of the clamp arm 120 extend along the second direction R2, such that the clamp arm 120 is tiltable or pivotable around the second direction R2. At a second end 122, opposite of the first end 121 in the first direction R1, the clamp arm 120 is arranged for being supported against a side of the profile 300 for the purpose of clamping the profile 300 on the support arm 110 by means of the clamp arm 120.

As shown in Figure 9, the clamp arm 120 can be tilted away from the support arm 110, and more specifically away from the receiving structure 112 for the profile 300 on the support arm 110, such that sufficient space is available between the clamp arm 120 and the support arm 110 to allow a user to arrange the profile 300 in the receiving structure 112 on the support arm 110. When the profile 300 is then received in the receiving structure 112, the clamp arm 120 can be tilted towards the profile 300 until the second end 122 of the clamp arm 120 is supported against the side of the profile 300, as shown in Figure 10. In this way the profile 300 is clamped between the clamp arm 120 and the support arm 110, and more specifically between the second end 122 of the clamp arm 120 and the receiving structure 112 on the support arm 110.

The profile clamping device 100 further comprises a fastener 130 in the form of a bolt 131 and a nut 134. The bolt 131 of the fastener 130 is arranged through an opening (not visible) in the support arm 110, then through a corresponding opening 215 in the support element 200 arranged on the support arm 110 between the support arm 110 and the clamp arm 120, which support element 200 will be described in further detail below, and finally through a corresponding opening 125 in the clamp arm 120. The head 132 of the bolt 131 is thereby located below the support arm 110, and the nut 134 of the fastener 130 is arranged on the bolt 131 above the clamp arm 120. In this way, when the profile 300 is clamped between the clamp arm 120 and the support arm 110, the fastener 130 can be operated, by screwing the nut 134 downwards on the bolt 131, to move the clamp arm 120 and the support arm 110 towards each other between the head 132 of the bolt 131 and the nut 134 in order to tighten the clamping of the profile 300 on the support arm 110 by means of the clamp arm 120.

The support element 200 of the profile clamping device 100, as shown separately in Figures 1-5, is preferably manufactured in a single piece from a plastic by means of injection moulding.

The support element 200 comprises a base portion 210. The support element 200 is supported with the base portion 210 on the support arm 110 of the profile clamping device 100 between the support arm 110 and the clamp arm 120 of the profile clamping device 100. The support element 200 is provided with an opening 215 through the base portion 210. Said opening 215 is provided for passing therethrough the bolt 131 of the fastener 130, as already explained above. For this purpose, the opening 215 in the base portion 210 of the support element 200 is aligned with the corresponding opening for the bolt 131 of the fastener 130 in the support arm 110 of the profile clamping device 100 when the support element 200 is supported on the support arm 110.

The opening 215 in the base portion 210 of the support element 200 is provided along its inner circumference with inwards projecting teeth 216. The purpose of the inwards projecting teeth 216 is to grip on the screw thread of the bolt 131 of the fastener 130, in order to hold or at least to aid in holding the bolt 131 in position, when the bolt 131 is arranged through the opening in the support arm 110 of the profile clamping device 100, the opening 215 in the base portion 210 of the support element 200 and the opening 125 in the clamp arm 120 of the profile clamping device 100, and when the fastener 130 is not being operated. This prevents or at least aids in preventing the fastener 130 from falling downwards and pushing the clamp arm 120 of the profile clamping device 100 towards the support arm 110 of the profile clamping device 100, when the fastener 130 is not being operated, for example when a user of the profile clamping device 100 is still busy with supporting a profile 300 on the support arm 110 of the profile clamping device 100.

The support element 200 further comprises a first support portion 220 and a second support portion 220 extending upwards from the base portion 210 of the support element 200. The first support portion 220 and the second support portion 220 are provided for supporting the clamp arm 120 of the profile clamping device 100 when the support element 200 is supported with the base portion 210 on the support arm 110 of the profile clamping device 100 between the clamp arm 120 and the support arm 110 of the profile clamping device 100. Therefore, the first support portion 220 and the second support portion 220 are sufficiently strong to carry the weight of the clamp arm 120 and the fastener 130. In alternative embodiments the support element 200 may also be provided with one support portion 220 or more than two support portions 220 for supporting the clamp arm 120 of the profile clamping device 100.

The first support portion 220 and the second support portion 220 supporting the clamp arm 120 of the profile clamping device 100 is beneficial for keeping the clamp arm 120 tilted away from the support arm 110 of the profile clamping device 100 while a user of the profile clamping device 100 is supporting a profile 300 on the support arm 110 of the profile clamping device 100. In this way sufficient space is left open between the clamp arm 120 and the support arm 10 of the profile clamping device 100 for the user to be able to support the profile 300 on the clamp arm 120, and this without the user having manually keep the clamp arm 120 of the profile clamping device 100 tilted away from the support arm 110 of the profile clamping device 100.

The first support portion 220 and the second support portion 220 are arranged in the second direction R2 on opposing sides of the opening 215 in the base portion 210 of the support element 200, in order to support the clamp arm 120 of the profile device 100 at opposing sides of bolt 131 of the fastener 130 arranged through the corresponding openings 125, 215 in the clamp arm 120 of the profile clamping device 100, the base portion 210 of the support element 200 and the support arm 110 of the profile clamping device 100. This is beneficial for distributing the support of the clamp arm 120 by the first support portion 220 and the second support portion 220 in the second direction R2.

As can be seen in Figures 9 and 10, the first support portion 220 and the second support portion 220 are provided for being collapsed and/or compressed between the clamp arm 120 and the support arm 110 of the profile clamping device 100 when the clamp arm 120 of the profile clamping device 100 is tilted towards the support arm 110 of the profile clamping device 100, by means of operating the fastener 130, for clamping a profile 300 supported on the support arm 110 of the profile clamping device 100 between the clamp arm 120 and the support arm 110 of the profile clamping device 100, and for tightening the clamping of the profile 300 between the clamp arm 120 and the support arm 110 of the profile clamping device 100.

For this purpose, the first support portion 220 and the second support portion 200 are provided in a resilient manner, extend upwards from the base portion 210 of the support element 200 and curve sidewards in the first direction R1 towards the clamp arm 120 of the profile clamping device 100, and are provided thinner at a bottom section 221 near the base portion 210 of the support element 200. In this way, when the clamp arm 120 of the profile clamping device 100 is moved towards the support arm 110 of the profile clamping device 100, the first support portion 220 and the second support portion 220 bend at the thinner bottom section 221. Thereby, the curved sections 222 of the first support portion 220 and the second support portion 220 are collapsed and further compressed underneath the clamp arm 120 of the profile clamping device 100. This configuration of the first support portion 220 and the second support portion 220 is beneficial for collapsing the first support portion 220 and the second support portion 220 with little resistance between the clamp arm 120 and the support arm 110 of the profile clamping device 100 when the clamp arm 120 and the support arm 110 of the profile clamping device 100 are moved towards each other by means of the operation of the fastener 130.

The support element 200 and the support element 200 in combination with the support arm 110 of the profile clamping device 100 are provided with several measures to maintain the support element 200 in the desired position on the support arm 110 of the profile clamping device 100 when the support element 200 is supported with the base portion 210 on the support arm 110 of the profile clamping device 110. In this way the clamp arm 120 of the profile clamping device 100 is always supported in the correct manner by the first support portion 220 and the second support portion 220.

A first measure is that the support arm 110 of the profile clamping device 100 is provided with a recess 114 for receiving the base portion 210 of the support element 200 when the support element 200 is supported with the base portion 210 on the support arm 110 of the profile clamping device 100, as can for example be seen in Figures 6-8. The recess 114 is delimited at opposing sides in the first direction R1 by the longitudinal socket 113 at the end of the support arm 110 of the profile clamping device 100 and by an upstanding wall 116 extending along the second direction R2 on the support arm 110 of the profile clamping device 100. The recess 114 prevents the support element 200 from sliding on the support arm 110 of the profile clamping device 100 in the first direction R1, and from rotating around the bolt 131 of the fastener 130, i.e. around a height direction R3 transverse to the first direction R1 and the second direction R2.

As a second measure the support element 200 is provided with a first gripping element 230 and a second gripping element 230. The first gripping element 230 and the second gripping element 230 are located at opposing ends 211, 212 of the base portion 210 of the support element 200 in the second direction R2. The first gripping element 230 and the second gripping element 230 are configured for gripping on the support arm 110 of the profile clamping device 100 when the support element 200 is supported with the base portion 210 on the support arm 110 of the profile clamping device 100, in order to prevent the support element 200 from moving on the support arm 110 of the profile clamping device 100, as will be explained in further detail below.

In the first direction R1 the first gripping element 230 and the second gripping element 230 extend a bit beyond the base portion 210 of the support element 200 to grip in the second direction R2 on opposing sides of the upstanding wall 116 on the support arm 100 of the profile clamping device 100. This prevents the support element 200 from sliding on the support arm 110 of the profile clamping device 100 in the second direction R2, and from rotating around the bolt 131 of the fastener 130, i.e. around the height direction R3.

The first gripping element 230 and the second gripping element 230 also extend downwards from the base portion 210 of the support element 200 to grip in the second direction R2 on opposing sides 111 of the support arm 110 of the profile clamping device 100. This prevents the support element 200 from sliding on the support arm 110 of the profile clamping device 100 in the second direction R2, and from rotating around the bolt 131 of the fastener 130, i.e. around the height direction R3.

At the bottom the first gripping element 230 and the second gripping element 230 are also provided with inwards protruding gripping ridges 232 extending along the first direction R1. The gripping ridges 232 are provided for griping underneath the support arm 110 of the profile clamping device 100. Thereby, the position of the gripping ridges 232 on the first gripping element 230 and the second gripping element 230 in the height direction R3 is chosen to account for the thickness of the support arm 110 of the profile clamping device 100 in the height direction R3, as can be seen in Figures 10 and 11. This prevents the support element 200 from moving upwards and downwards on the support arm 110 of the profile clamping device 100.

Each of the first gripping element 230 and the second gripping element 230 is also provided with two reinforcing ridges 231 extending along the height direction R3. The reinforcing ridges 231 reinforce the plastic material of the first gripping element 230 and the second gripping element 230, such that first gripping element 230 and the second gripping element 230 are more rigid, such the support element 200 can be clipped on the support arm 110 of the profile clamping device 100 without the first gripping element 230 and the second gripping element 230 getting permanently bent outwards.

It should be noted that in alternative embodiments, the support element 200, as shown in Figures 1-5, may also be provided with one side comprising one of the gripping elements 230 and one of the support portion 220, omitted in the second direction R2, but including the part of the base portion 210 comprising the opening 215.

## Claims

1. A support element (200) for a profile clamping device (100), wherein the profile clamping device (100) comprises:
a support arm (110) configured for supporting a profile (300);
a clamp arm (120) connected in a tiltable manner to the support arm (110), wherein the clamp arm (120) is configured for being supported against a side (301) of the profile (300) for clamping the profile (300) on the support arm (110) by means of the clamp arm (120); and
a fastener (130), wherein the fastener (130) is configured for being arranged through an opening of the support arm (110) and an opening (125) of the clamp arm (120), wherein the fastener (130) is configured to be operable for moving the clamp arm (120) and the support arm (110) towards each other for tightening the clamping of the profile (300) on the
support arm (110) by means of the clamp arm (120),
wherein the support element (200) comprises:
a base portion (210) configured for being supported on the support arm (110) of the profile clamping device (100) between the support arm (110) and the clamp arm (120) of the profile clamping device (100), wherein the base portion (210) comprises an opening (215) configured for passing therethrough the fastener (130) of the profile clamping device (100) when the fastener (130) of the profile clamping device (100) is arranged through the opening of the support arm (110) and the opening (125) of the clamp arm (120) of the profile clamping device (100); and
at least one support portion (220) extending upwards from the base portion (210), wherein the at least one support portion (220) is configured for supporting the clamp arm (120) when the support element (200) is supported with the base portion (210) on the support arm (110) of the profile clamping device (100).

2. The support element (200) according to claim 1, wherein the support element (200) comprises at least one gripping element (230), wherein the at least one gripping element (230) is configured for gripping on the support arm (110) of the profile clamping device (100) when the support element (200) is supported with the base portion (210) on the support arm (110) of the profile clamping device (100).

3. The support element (200) according to claim 2, wherein the at least one gripping element (230) comprises a first gripping element (230) and a second gripping element (230), wherein the first gripping element (230) and the second gripping element (230) are arranged on opposing ends (211, 212) of the base portion (210).

4. The support element (200) according to any one of the claims 1-3, wherein the opening (215) of the base portion (210) is provided with inwards projecting teeth (216) configured for holding the fastener (130) of the profile clamping device (100) in position when the fastener (130) of the profile clamping device (100) is passed through the opening (215) of the base portion (210).

5. The support element (200) according to any one of the claims 1-4, wherein the at least one support portion (220) is resilient.

6. The support element (200) according to any one of the claims 1-5, wherein the at least one support portion (220) comprises a first support portion (220) and a second support portion (220), wherein the first support portion (220) and the second support portion (220) are arranged on opposing sides of the opening (215) of the base portion (210).

7. The support element (200) according to any one of the claims 1-6, wherein the at least one support portion (220) extends upwards from the base portion (210) and curves sidewards.

8. The support element (200) according to any one of the claims 1-7, preferably at least in combination with claim 7, wherein the at least one support portion (220) is provided thinner at a bottom section (221) of the at least one support portion (220) near the base portion (210).

9. The support element (200) according to any one of the claims 1-8, wherein the support element (200) is manufactured in a single piece, preferably by means of injection moulding.

10. The support element (200) according to any one of the claims 1-9, wherein the support element (200) is manufactured from a plastic.

11. A profile clamping device (100) comprising the support element (200) according to any one of the claims 1-10, wherein the profile clamping device (100) comprises:
a support arm (110) configured for supporting a profile (300);
a clamp arm (120) connected in a tiltable manner to the support arm (110), wherein the clamp arm (120) is configured for being supported against a side (301) of the profile (300) for clamping the profile (300) on the support arm (110) by means of the clamp arm (120); and
a fastener (130), wherein the fastener (130) is configured for being arranged through an opening of the support arm (110) and an opening (125) of the clamp arm (120), wherein the fastener (130) is configured to be operable for moving the clamp arm (120) and the support arm (110) towards each other for tightening the clamping of the profile (300) on the support arm (110) by means of the clamp arm (120),
wherein the support element (200) is supported with the base portion (210) on the support arm (110) between the support arm (110) and the clamp arm (120) with the at least one support portion (220) of the support element (200) supporting the clamp arm (120), and
wherein the fastener (130) is arranged through the opening of the support arm (110), the opening (215) of the base portion (210) of the support element (200) and the opening (125) of the clamp arm (120).

12. The profile clamping device (100) according to claim 11, at least in combination with claim 2, wherein the support element (200) is supported with the base portion (210) on the support arm (110) between the support arm (110) and the clamp arm (120) with the at least one gripping element (230) of the support element (200) gripping on the support arm (110).

13. The profile clamping device (100) according to claim 11 or 12, wherein the support arm (110) is provided with a recess (114) for receiving the base portion (210) of the support element (200), and wherein the support element (200) is supported with the base portion (210) on the support arm (110) with the base portion (210) received in said recess (114).

14. The profile clamping device (100) according to any one of the claims 11-13, wherein the fastener (130) comprises a bolt (131) and a nut (134).

15. A method of using the profile clamping device (100) according to any one of the claims 11-14, wherein the method comprises the steps of:
providing a profile (300);
supporting the profile (300) on the support arm (110);
operating the fastener (130) for moving the clamp arm (120) and the support arm (110) towards each other, such that the clamp arm (120) is supported against a side (301) of the profile (300) for clamping the profile (300) on the support arm (110) by means of the clamp arm (120).
